# EUROPÄISCHE PATENTSCHRIFT

(11) **EP 3 212 913 B1**
(45) Veröffentlichungstag und Bekanntmachung des Hinweises auf die Patenterteilung: **08.05.2019**
(21) Anmeldenummer: 15756387.5
(22) Anmeldetag: 25.08.2015
(51) Int. Cl.: F02D 9/10, F16K 1/22, F02M 26/70

(54) **KLAPPENVORRICHTUNG FÜR EINE VERBRENNUNGSKRAFTMASCHINE UND VERFAHREN ZUR HERSTELLUNG EINER DERARTIGEN KLAPPENVORRICHTUNG**
FLAP DEVICE FOR AN INTERNAL COMBUSTION ENGINE AND METHOD FOR MANUFACTURING SUCH A FLAP
SYSTÈME À CLAPET POUR UN MOTEUR À COMBUSTION INTERNE ET MÉTHODE POUR FABRIQUER UN TEL CLAPET

(30) Priorität: 30.10.2014 DE 102014115793
(43) Veröffentlichungstag der Anmeldung: 06.09.2017
(73) Patentinhaber: Pierburg GmbH, 41460 Neuss (DE)
(72) Erfinder: MICHELS, Jürgen, 41238 Mönchengladbach (DE); SIMONS, Norbert, 40233 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2015/069418
(87) Internationale Veröffentlichungsnummer: WO 2016/066300

(56) Entgegenhaltungen:
- DE-A1- 19 512 874
- DE-A1- 19 820 080
- DE-A1-102012 110 763
- US-A- 3 537 164
- US-A1- 2004 187 844
- US-A1- 2005 161 629
- US-A1- 2007 245 561

## Beschreibung

Die Erfindung betrifft eine Klappenvorrichtung für eine Verbrennungskraftmaschine mit einem Klappenkörper, einem Kanalgehäuse, in dem ein durchströmbarer Kanal ausgebildet ist, in welchem der Klappenkörper drehbar angeordnet ist, einem Aktor und einer Antriebwelle, die mittels des Aktors antreibbar ist und im Kanalgehäuse gelagert ist sowie ein Verfahren zur Herstellung einer derartigen Klappenvorrichtung für eine Verbrennungskraftmaschine, bei dem ein Kanalgehäuse hergestellt wird, eine metallische Antriebswelle in das Kanalgehäuse eingeschoben wird, ein Aktor am Kanalgehäuse montiert und mit der Antriebwelle gekoppelt wird und ein Klappenkörper aus Kunststoff im Kanal an der Antriebswelle befestigt wird.

Derartige Klappenvorrichtungen sind beispielsweise als Drosselklappen zur Regulierung der Luftzufuhr zum Verbrennungsmotor oder als Abgasrückführklappen zur Regelung der zum Verbrennungsmotor zurückgeführten Abgasmenge bekannt. Dabei wird die Klappe im Kanalgehäuse gedreht, wodurch der zur Verfügung stehende Durchströmungsquerschnitt geändert wird. Diese Klappen sind entweder einseitig oder beidseitig zumeist zentrisch im Gehäuse gelagert.

Diese Klappenvorrichtungen sind zumeist zentrisch auf einer Antriebswelle angeordnet, welche unter Zwischenschaltung eines Getriebes von einem Aktor angetrieben wird. Während in früheren Zeiten die Klappenkörper zumeist aus Metall waren und durch Schrauben an der Welle befestigt werden, in den letzten Jahren häufig Klappenkörper aus Kunststoff verwendet, da auch thermisch belastbare Kunststoffe zur Verfügung stehen. Dabei tritt jedoch häufig das Problem auf, dass bei thermischer Belastung, wie sie beispielsweise im Abgasbereich von Verbrennungsmotoren auftritt, durch die unterschiedlichen verwendeten Materialien unterschiedliche Wärmeausdehnungen entstehen, was dazu führt, dass die Klappen im Kanal hängen bleiben oder im geschlossenen Zustand nicht mehr ausreichend abdichten. Aus diesem Grund sind verschiedene Herstellungs- und Montageverfahren von Klappenvorrichtungen bekannt geworden, mit denen diese Probleme gelöst werden sollen.

So wird in der EP 1 371 832 B1 ein Drosselklappenstutzen offenbart, bei dem der Klappenkörper ein gelochtes Stanzteil ist, wobei das Stanzteil mehrere bügelförmige Abschnitte aufweist, durch die eine mit Querbohrungen versehene Welle an ihrer Umfangsseite nach dem Einschieben umschlossen wird. Anschließend wird der Klappenkörper mit der metallischen Welle mit Kunststoff umspritzt, welches sich in die Löcher des Klappenkörpers und der Welle setzt, so dass eine Befestigung des Klappenkörpers an der Welle erreicht wird. Bei diesem Umspritzen wird auch das außenliegende Gehäuse hergestellt. Durch anschließendes Laserschneiden wird die Gehäusewand von der Klappe getrennt, so dass eine relativ dichte Klappe hergestellt wird, bei der der Spalt lediglich die Breite des Laserschnitts aufweist. Eine weitere Erhöhung der Dichtigkeit der Klappe im geschlossenen Zustand kann jedoch nicht erreicht werden. Des Weiteren ist die thermische Belastbarkeit einer solchen Klappenvorrichtung begrenzt, da das Kanalgehäuse aus Kunststoff hergestellt werden muss.

Eine weitere Klappenvorrichtung ist aus der DE 10 2012 110 763 A1 bekannt. Diese Klappe besteht aus einem geschlitzten Wellenstumpf, in dessen Schlitz eine Metallscheibe angeordnet und mittels einer Schraube befestigt ist, welche mit einem Kunststoff zur Bildung des eigentlichen Klappenkörpers umspritzt ist. An der zum Wellenstumpf entgegengesetzten Seite weist der Kunststoffkörper eine Öffnung auf, in der ein Lager angeordnet ist, welches auf einen Achsstift geschoben wird, der im Gehäuse befestigt ist. Diese Klappenvorrichtung weist zwar eine erhöhte thermische Belastbarkeit aus, jedoch ist die Montage relativ aufwendig. Auch ist eine Positionierung des Klappenkörpers zur Einstellung eines gewünschten Spaltes nicht möglich, so dass ein dichter Verschluss der Klappe im Betrieb nicht sichergestellt werden kann.

Aus der US2007/0245561 A1 ist des Weiteren ein Drosselklappenstutzen sowie ein Verfahren zur Herstellung dieses Drosselklappenstutzens bekannt, bei dem eine Welle vollständig vom Kunststoff des Drosselklappenkörpers umspritzt wird und anschließend der Stutzen um die Welle und die Klappe gespritzt wird.

Des Weiteren ist aus der DE 195 12 874 A1 eine Drosselklappe bekannt, bei der die Welle mit einem Kunststoff umspritzt wird und an der Umspritzung und der Welle ein durchgehender Schlitz ausgebildet ist, durch den der Klappenkörper geschoben wird, der im Folgenden durch Schrauben an der umspritzten welle befestigt wird,

Es stellt sich daher die Aufgabe, eine Klappenvorrichtung sowie ein Verfahren zur Herstellung einer solchen Klappenvorrichtung bereitzustellen, durch die erreicht wird, dass die Klappenvorrichtung kostengünstig herstellbar und montierbar ist und andererseits im Kanal zur Einstellung eines gewünschten Spaltes, insbesondere zum Ausgleich thermischer Dehnungen positionierbar ist, ohne zusätzliche Maßnahmen vornehmen zu müssen. Des Weiteren soll eine korrekte Lage eines Magneten zur Stellungsrückmeldung sichergestellt werden.

Diese Aufgabe wird durch eine Klappenvorrichtung mit den Merkmalen des Hauptanspruchs 1 sowie ein Verfahren zur Herstellung einer derartigen Klappenvorrichtung mit den Merkmalen des Hauptanspruchs 5 gelöst.

Bezüglich der Klappenvorrichtung wird diese Aufgabe somit dadurch gelöst, dass die Antriebswelle im Kanal von einer metallischen Hülse umgeben ist, auf der der Klappenkörper aus Kunststoff durch Umspritzen der Hülse mit Kunststoff gebildet und fest angeordnet ist, wobei an einer radialen Seite am Umfang der Hülse ein axial verlaufender Schlitz ausgebildet ist und der Klappenkörper sich an der gegenüberliegenden radialen Seite erstreckt. Entsprechend kann der Klappenkörper mit der Hülse auf der Antriebswelle verschoben und gedreht werden. Dies ermöglicht eine genaue Positionierung des Klappenkörpers vor seiner Befestigung an der Antriebswelle. Diese Ausführung ermöglicht auch den Zugang zur Welle durch den Kanal, so dass eine Befestigung zwischen der Hülse und der Welle vom Kanal aus vorgenommen werden kann. Die andere Seite ist vollständig durch den Kunststoff geschlossen und weist somit keine Spalte auf, die zu Leckagen führen könnten.

Bezüglich des Verfahrens wird die Aufgabe dadurch gelöst, dass eine metallische Hülse zur Bildung eines Klappenkörpers mit einem Kunststoff umspritzt wird, beim Einschieben der Antriebswelle in das Kanalgehäuse die Antriebswelle in die Hülse eingeschoben wird, der Klappenkörper im Kanal positioniert wird und die Antriebswelle an der Hülse befestigt wird. Dieses Verfahren ist kostengünstig in wenigen Verfahrensschritten durchführbar und ermöglicht die Einstellung von gewünschten Leckagemengen oder eines vollständigen Verschlusses unabhängig von den gewählten Materialen des Kanalgehäuses.

Insbesondere ist es vorteilhaft, wenn die Antriebswelle an der Hülse befestigt ist, da beide Bauteile aus Metall hergestellt sind und somit stoffschlüssig in unterschiedlichen Positionen zueinander miteinander verbunden werden können.

In einer hierzu weiterführenden Ausführungsform weist der Klappenkörper an der radialen Seite der Hülse, an der der Schlitz ausgebildet ist, eine Ausnehmung auf, wobei der Klappenkörper zum Kanalgehäuse weisende ringförmige Abschnitte aufweist, die die Hülse vollumfänglich umgeben. Der Schlitz ermöglicht den Zugang zur Welle, während gleichzeitig die vollumfängliche Umspritzung der Hülse an den Endbereichen des Kanals Leckagen entlang der Hülse durch das oder die Lager nach außen in allen Klappenstellungen deutlich verringern.

In einer bevorzugten Ausbildung der Erfindung ist die Antriebswelle einseitig gelagert, wobei das zum Aktor gegenüberliegende Ende der Hülse durch eine den ringförmigen Abschnitt axial begrenzende Wand des Klappenkörpers verschlossen ist. Auf diese Weise können trotz der einseitigen Lagerung keine Leckagen zwischen der Hülse und der Welle entstehen.

In einer weiteren bevorzugten Ausbildung des Verfahrens wird vor der Befestigung der Antriebswelle an der Hülse der Klappenkörper derart im Kanal und auf der Antriebswelle gedreht und entlang der Wellenachse verschoben, bis ein definierter Spalt eingestellt ist. Dieser Spalt kann beispielsweise entsprechend der bei bestimmten Betriebstemperaturen zu erwartenden Dehnung des Klappenkörpers so eingestellt werden, dass ein vollständiger leckagefreier Verschluss ermöglicht wird, ohne ein Verklemmen der Klappe im Kana befürchten zu müssen. Auch können gewünschte Leckagen in der Endstellung eingestellt werden.

Dabei ist es besonders bevorzugt, wenn vor der Befestigung der Antriebswelle an der Hülse ein Abtriebszahnrad eines Getriebes des Aktors an der Antriebswelle befestigt wird. So kann die Endlage über einen zuvor kalibrierten Sensor passend zur Lage des Klappenkörpers im Kanal eingestellt werden, in dem das Zahnrad mit der Welle in seine zum Sensor optimalen Lage eingestellt wird, anschließend der Klappenkörper auf der Welle in seine gewünschte Lage gedreht wird und daraufhin in dieser Lage befestigt wird.

Die Befestigung der Antriebswelle an der Hülse erfolgt vorzugsweise mittels Schweißen am Schlitz in der Hülse. Dieser ist gut zugänglich und durch das Schweißen wird eine langlebige sichere Befestigung hergestellt, die auch sehr schnell erfolgt, so dass Taktzeiten bei der Herstellung im Vergleich zum Verschrauben reduziert werden.

Vorzugsweise ist auf der Antriebswelle oder dem Abtriebszahnrad ein Magnet zur Lagerückmeldung befestigt, wobei die Antriebswelle bezüglich ihrer axialen Lage und ihrer Drehlage zunächst definiert ausgerichtet wird und anschließend die Hülse mit der Antriebswelle verschweißt wird. So wird es möglich, den Magneten optimal zum Sensor auszurichten, wodurch sehr gute und genaue Ergebnisse bei der Lagerückmeldung erzielt werden.

Es wird somit eine Klappenvorrichtung geschaffen, bei der eine besonders einfache Montage möglich ist. Auftretende Chargenschwankungen bei der Herstellung des Klappenkörpers können mit einfachen Mitteln durch Änderung der Winkellage oder der axialen Lage der Hülse auf der Antriebswelle ausgeglichen werden. Dabei wird eine genaue Positionierung des Klappenkörpers im Kanalgehäuse erreicht, was zu einer relativ guten Dichtheit des Klappenkörpers im geschlossenen Zustand und zu einem verringerten Ausschuss bei der Montage führt. Außerdem ist die Klappenvorrichtung kostengünstig herstellbar und montierbar.

Ein Ausführungsbeispiel einer erfindungsgemäßen Klappenvorrichtung ist in den Figuren dargestellt und wird nachfolgend beschrieben.
Figur 1 zeigt eine Seitenansicht einer erfindungsgemäßen Klappenvorrichtung.
Figur 2 zeigt eine dreidimensionale Darstellung der Klappe aus Figur 1 von einer ersten Seite.
Figur 3 zeigt eine dreidimensionale Darstellung der Klappe aus Figur 2 von der entgegengesetzten Seite.

Die erfindungsgemäße Klappenvorrichtung besteht aus einem Kanalgehäuse 10, in dem ein durchströmbarer Kanal 12 ausgebildet ist, dessen freier Durchströmungsquerschnitt mittels eines drehbar im Kanal 12 angeordneten Klappenkörpers 14 geregelt werden kann. Der Klappenkörper 14 ist mit einer Antriebswelle 16 verbunden, die einseitig das Kanalgehäuse 10 an einer Bohrung 17 durchdringt, in der die Antriebswelle 16 gelagert ist. Die Antriebswelle 16 ragt durch die Bohrung 17 in ein Aktorgehäuse 18, welches im vorliegenden Ausführungsbeispiel einstückig mit dem Kanalgehäuse 10 ausgebildet ist. Im Aktorgehäuse 18 ist ein Aktor 20 angeordnet, der aus einem Elektromotor 22 mit gekoppeltem Getriebe 24 besteht. Das Getriebe 24 weist ein Abtriebszahnrad 26 auf, welches auf der Antriebswelle 16 befestigt ist. Bei Bestromung des Elektromotors 22 wird entsprechend die Antriebswelle 16 mit dem Klappenkörper 14 im Kanal 12 über das Getriebe 24 gedreht.

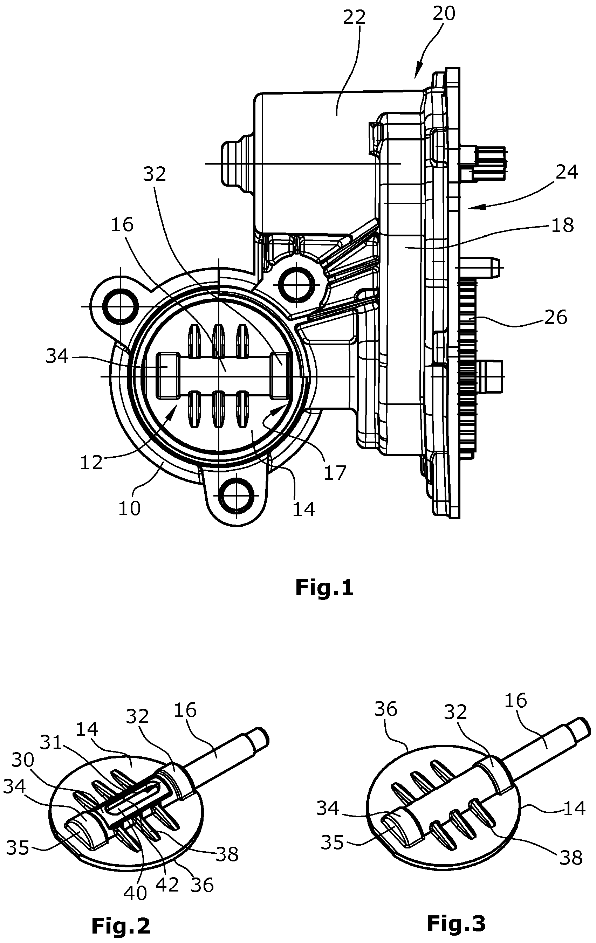

In den Figuren 2 und 3 ist die Ausbildung der Klappe zu erkennen. Sie besteht erfindungsgemäß aus einer metallischen Hülse 30, auf die der Klappenkörper 14 aus Kunststoff aufgespritzt wird. Der Klappenkörper 14 umschließt die Hülse 30 im mittleren Bereich der Hülse 30 etwa um ihren halben Umfang, während er an der radial entgegengesetzten Seite eine Ausnehmung 31 aufweist. In den axialen Endbereichen der Hülse 30 ist diese vollumfänglich durch zwei ringförmige Abschnitte 32, 34 vom Kunststoff umschlossen, die somit die Ausnehmung axial begrenzen. Der ringförmige zum Aktor 20 weisende Abschnitt 32 des Klappenkörpers 14 endet etwa in Höhe des Endes der Hülse 30, während der vom Aktor weg weisende Abschnitt 34 eine axiale Wand 35 aufweist, die das gegenüberliegende Ende der Hülse 30 verschließt. Ein etwa kreisförmiger Grundkörper 36 des Klappenkörpers 14 ragt axial über die axial verschließende Wand 35 und den Abschnitt 34 hinaus. Zur Verbesserung der Stabilität des Klappenkörpers 14 sind an beiden Seiten des Grundkörpers 36 nebeneinander liegende Rippen 38 ausgebildet, die sich entlang des Grundkörpers 36 in Richtung der Hülse 30 erstrecken.

Der Innendurchmesser der Hülse 30 entspricht im Wesentlichen dem Außendurchmesser der Antriebswelle 16, so dass diese in die Hülse 30 bis maximal zur verschließenden Wand 35 des ringförmigen Abschnitts 34 geschoben werden kann.

Bei der Montage der Klappenvorrichtung wird zunächst der Klappenkörper 14 mit der Hülse 30 im Kanalgehäuse 10 festgehalten. Durch Einschieben der Antriebswelle 16 durch die Bohrung 17 in den Kanal 12 dringt die Antriebswelle 16 entsprechend in die Hülse 30 ein, so dass der Klappenkörper 14 auf der Antriebswelle 16 drehbar und entlang der Antriebswelle 16 geringförmig verschiebbar gehalten wird. Der Klappenkörper 14 wird nun derart auf der Antriebswelle 16 verschoben, dass der Klappenkörper 14 in Achsrichtung der Antriebswelle 16 zum umgebenden Kanalgehäuse 10 an beiden Enden einen gleichen Abstand von üblicherweise einigen 100stel Millimetern vorhanden ist. Zusätzlich wird der Klappenkörper 14 auf der Antriebswelle 16 gedreht bis er mit seinen von der Antriebswelle 16 weg weisenden Klappenflügelenden einen entsprechenden Abstand von einigen Hundertstel Millimetern zum umliegenden Kanalgehäuse 12 aufweist. Entsprechend ist der Klappenkörper 14 im Kanalgehäuse 10 zentriert.

Auf der Antriebswelle 16 ist das Abtriebszahnrad 26 befestigt. Am zum Aktor 20 weisenden Ende der Antriebswelle 16 oder auf dem Abtriebszahnrad 26 ist ein nicht dargestellter Magnet angeordnet, der mit einem ebenfalls in der Figur nicht sichtbaren berührungslosen Sensor zur Lagerückmeldung zusammenwirkt. Dieser Sensor ist üblicherweise auf einer Platine oder direkt am Stanzkamm angeordnet, die an einem das Aktorgehäuse 18 verschließenden Decke! befestigt ist. Während der Klappenkörper 14 im beschriebenen Zustand im Kanalgehäuse 10 gehalten wird, kann nun die Antriebswelle 16 so in Achsrichtung verschoben und gedreht werden, dass das Ende der Antriebswelle 16 beziehungsweise das Abtriebszahnrad 26 optimal sowohl bezüglich ihres Winkels als auch bezüglich ihres axialen Abstandes zum Sensor ausgerichtet wird. In dieser Position, in der der Klappenkörper 14 zentriert im Kanal 12 liegt und die Position der Antriebswelle 16 mit dem Zahnrad 26 zum Sensor optimiert ist, wird die Antriebswelle 16 an der Hülse 30 beispielsweise durch Laserschweißen festgeschweißt. Hierzu weist die Hülse 30 an ihrer vom Kunststoff des Klappenkörpers 14 abgewandten Seite im Bereich der Ausnehmung 31, welche im den Kanal 12 verschließenden Zustand an der stromabwärtigen Seite angeordnet ist, einen Schlitz 40 auf, durch den hindurch die Antriebswelle 16 zugänglich ist, so dass die Schweißnaht entlang der den Schlitz 40 begrenzenden Wände 42, auf der Antriebswelle 16 gezogen wird. Entsprechend entsteht eine feste nicht lösbare formschlüssige Verbindung zwischen der Antriebswelle 16 und dem Klappenkörper 14.

Selbstverständlich ist es ebenso möglich, zunächst die Ausrichtung der Antriebswelle 16 zum Sensor vorzunehmen, anschließend den Klappenkörper 14 optimal im Kanalgehäuse 10 auszurichten und darauf folgend die Befestigung mittels der Schweißnaht durchzuführen.

Somit wird mit kostengünstigen Einzelteilen eine Klappenvorrichtung geschaffen, die mit geringem Aufwand zu montieren ist. Die Lage der Klappe kann im Kanal optimiert werden, so dass Chargenschwankungen ausgeglichen werden können. Sowohl die axiale Lage der Welle und des Körpers zur Welle als auch die Drehlage beider Teile zueinander und zum umliegenden Gehäuse können optimal eingestellt werden und anschließend kann die Welle zum Klappenkörper in dieser relativen Lage zueinander einfach fixiert werden. Des Weiteren wird eine optimierte Lagerückmeldung und daraus folgend eine sehr genaue Regelung ermöglicht. Es wird zusätzlich eine hohe Dichtigkeit der Klappe im den Kanal verschließenden Zustand erreicht und gleichzeitig die Gefahr eines Verklemmens bei auftretender thermischer Belastung minimiert. Die Lage des Schlitzes und der Ausnehmung im stromabwärtigen Bereich des Klappenkörpers im geschlossenen Zustand stellt sicher, dass kein Gas aufgrund hoher Druckunterschiede aus dem Kanal entlang der Welle in Richtung des Aktors dringen kann.

Es sollte deutlich sein, dass der Schutzbereich des Hauptanspruchs nicht auf das beschriebene Ausführungsbeispiel beschränkt ist, sondern verschiedene konstruktive Modifikationen und eine unterschiedliche Reihenfolge der Verfahrensschritte denkbar sind. Die Form der Einzelteile, insbesondere der Aufbau und die Art des Aktors oder des Getriebes ist selbstverständlich an die jeweilige Aufgabe anpassbar. Auch können pneumatische Aktoren oder dergleichen verwendet werden.

## Patentansprüche

1. Klappenvorrichtung für eine Verbrennungskraftmaschine mit einem Klappenkörper (14),
einem Kanalgehäuse (10), in dem ein durchströmbarer Kanal (12) ausgebildet ist, in welchem der Klappenkörper (14) drehbar angeordnet ist,
einem Aktor (20) und
einer Antriebwelle (16), die mittels des Aktors (20) antreibbar ist und im Kanalgehäuse (10) gelagert ist,
**dadurch gekennzeichnet, dass**
die Antriebswelle (16) im Kanal (12) von einer metallischen Hülse (30) umgeben ist, auf der der Klappenkörper (14) aus Kunststoff durch Umspritzen der Hülse (30) mit Kunststoff gebildet und fest angeordnet ist, wobei an einer radialen Seite am Umfang der Hülse (30) ein axial verlaufender Schlitz (40) ausgebildet ist und der Klappenkörper (14) sich an der gegenüberliegenden radialen Seite erstreckt.

2. Klappenvorrichtung für eine Verbrennungskraftmaschine nach Anspruch 1,
**dadurch gekennzeichnet, dass**
die Antriebswelle (16) an der Hülse (30) befestigt ist.

3. Klappenvorrichtung für eine Verbrennungskraftmaschine nach einem der Ansprüche 1 oder 2,
**dadurch gekennzeichnet, dass**
der Klappenkörper (14) an der radialen Seite der Hülse (30), an der der Schlitz (40) ausgebildet ist, eine Ausnehmung (31) aufweist, wobei der Klappenkörper (14) zum Kanalgehäuse (10) weisende ringförmige Abschnitte (32, 34) aufweist, die die Hülse (30) vollumfänglich umgeben.

4. Klappenvorrichtung für eine Verbrennungskraftmaschine nach einem der vorhergehenden Ansprüche,
**dadurch gekennzeichnet, dass**
die Antriebswelle (16) einseitig gelagert ist, wobei das zum Aktor (20) gegenüberliegende Ende der Hülse (30) durch eine den ringförmigen Abschnitt axial begrenzende Wand (35) des Klappenkörpers (14) verschlossen ist.

5. Verfahren zur Herstellung einer Klappenvorrichtung für eine Verbrennungskraftmaschine nach einem der vorhergehenden Ansprüche, bei dem
ein Kanalgehäuse (10) hergestellt wird,
eine metallische Antriebswelle (16) in das Kanalgehäuse (10) eingeschoben wird,
ein Aktor (20) am Kanalgehäuse (10) montiert und mit der Antriebswelle (14) gekoppelt wird und
ein Klappenkörper (14) aus Kunststoff im Kanal (12) an der Antriebswelle (16) befestigt wird,
**dadurch gekennzeichnet, dass**
eine metallische Hülse (30) zur Bildung des Klappenkörpers (14) mit einem Kunststoff umspritzt wird, beim Einschieben der Antriebswelle (16) in das Kanalgehäuse (10) die Antriebswelle (16) in die Hülse (30) eingeschoben wird, der Klappenkörper (14) im Kanal (12) positioniert wird und die Antriebswelle (16) an der Hülse (30) befestigt wird.

6. Verfahren zur Herstellung einer Klappenvorrichtung für eine Verbrennungskraftmaschine nach Anspruch 5,
**dadurch gekennzeichnet, dass**
vor der Befestigung der Antriebswelle (16) an der Hülse (30) der Klappenkörper (14) derart im Kanal (12) und auf der Antriebswelle (16) gedreht und entlang der Wellenachse verschoben wird, bis ein definierter Spalt eingestellt ist.

7. Verfahren zur Herstellung einer Klappenvorrichtung für eine Verbrennungskraftmaschine nach Anspruch 5 oder 6,
**dadurch gekennzeichnet, dass**
vor der Befestigung der Antriebswelle (16) an der Hülse (30) ein Abtriebszahnrad (26) eines Getriebes (24) des Aktors (20) an der Antriebswelle (16) befestigt wird.

8. Verfahren zur Herstellung einer Klappenvorrichtung für eine Verbrennungskraftmaschine nach einem der Ansprüche 5 bis 7,
**dadurch gekennzeichnet, dass**
die Befestigung der Antriebswelle (16) an der Hülse (30) mittels Schweißen erfolgt.

9. Verfahren zur Herstellung einer Klappenvorrichtung für eine Verbrennungskraftmaschine nach einem der Ansprüche 5 bis 8,
**dadurch gekennzeichnet, dass**
auf der Antriebswelle (16) oder auf dem Abtriebszahnrad (26) ein Magnet zur Lagerückmeldung befestigt ist, wobei die Antriebswelle (16) bezüglich ihrer axialen Lage und ihrer Drehlage definiert ausgerichtet wird und anschließend die Hülse (30) mit der Antriebswelle (16) verschweißt wird.

## Claims

1. Flap device for an internal combustion engine, comprising
a flap body (14),
a channel housing (10) with a flow-through channel (12) formed therein, in which the flap body (14) is arranged in a rotatable manner,
an actuator (20) and
a drive shaft (16) adapted to be driven by the actuator (20) and supported in the channel housing (10),
**characterized in that**
the drive shaft (16) is surrounded in the channel (12) by a metal sleeve (30) on which the flap body (14) is formed from plastic material by overmolding the sleeve (30) with plastic material and on which it is fixedly arranged, wherein an axially extending slot (40) is formed in a radial side at the circumference of the sleeve (30) and the flap body (14) extends on the opposite radial side.

2. Flap device for an internal combustion engine of claim 1, **characterized in that** the drive shaft (16) is fastened to the sleeve (30).

3. Flap device for an internal combustion engine of one of claims 1 or 2, **characterized in that** the flap body (14) has a recess (31) in the radial side of the sleeve (30) in which the slot (40) is formed, wherein the flap body (14) has annular sections (32, 34) directed towards the channel housing (10) that surround the sleeve (30) all along the circumference.

4. Flap device for an internal combustion engine of one of the preceding claims, **characterized in that** the drive shaft (16) is supported at one side, wherein the end of the sleeve (30) opposite the actuator (20) is closed by a wall (35) of the flap body (14) axially delimiting the annular section.

5. Method for manufacturing a flap device for an internal combustion engine of one of the preceding claims, wherein
a channel housing (10) is manufactured,
a metal drive shaft (16) is inserted into the channel housing (10),
an actuator (20) is mounted to the channel housing (10) and is coupled to the drive shaft (14), and
a flap body (14) of plastic material is fastened in the channel (12) to the drive shaft (16),
**characterized in that**
a metal sleeve (30) is overmolded with plastic material to form the flap body (14), that, upon inserting the drive shaft (16) into the channel housing (10), the drive shaft (16) is inserted into the sleeve (30), that the flap body (14) is positioned in the channel (12) and that the drive shaft (16) is fastened to the sleeve (30).

6. Method for manufacturing a flap device for an internal combustion engine of claim 5, **characterized in that** before fastening the drive shaft (16) to the sleeve (30), the flap body (14) is turned in the channel (12) and on the drive shaft (16) and displaced along the shaft axis until a defined gap is set.

7. Method for manufacturing a flap device for an internal combustion engine of claim 5 or 6, **characterized in that** before fastening the drive shaft (16) to the sleeve (30), an output gearwheel (26) of a gearing (24) of the actuator (20) is fastened on the drive shaft (16).

8. Method for manufacturing a flap device for an internal combustion engine of one of claims 5 to 7, **characterized in that** the drive shaft (16) is fastened o the sleeve (30) by welding.

9. Method for manufacturing a flap device for an internal combustion engine of one of claims 5 to 8, **characterized in that** a magnet is fastened on the drive shaft (16) or on the output gearwheel (26) for position feedback, wherein the drive shaft (16) is aligned in a defined manner with respect to its axial position and its rotational position and the sleeve (30) is welded to the drive shaft (16) thereafter.

## Revendications

1. Système à clapet pour un moteur à combustion interne, avec
un corps de clapet (14),
un carter de canal (10) dans lequel un canal (12) est formé, qui peut être traversé, ledit corps de clapet (14) étant disposé dans le canal de manière rotative,
un actionneur (20) et
un arbre d'entrainement (16) pouvant être entrainé par ledit actionneur (20) et étant supporté dans le carter de canal (10),
**caractérisé en ce que**
dans le canal (12), l'arbre d'entrainement (16) est entouré par une douille (30) métallique, sur laquelle le corps de clapet (14) en matière plastique est formé par surmoulage de la douille (30) avec matière plastique et sur laquelle il est disposé de manière fixe, une fente (40) axiale étant formée dans un côté radial de la circonférence de la douille (30) et le corps de clapet (14) s'étendant sur le côté radial opposé.

2. Système à clapet pour un moteur à combustion interne selon la revendication 1, **caractérisé en ce que** l'arbre d'entrainement (16) est monté sur la douille (30).

3. Système à clapet pour un moteur à combustion interne selon l'une quelconque des revendications 1 ou 2, **caractérisé en ce que** le corps de clapet (14) présent un évidement (31) dans le côté radial de la douille (30) dans laquelle la fente (40) est formée, ledit corps de clapet (14) ayant des sections annulaires (32, 34) tournées vers le carter de canal (10), qui entourent la douille (30) sur toute sa circonférence.

4. Système à clapet pour un moteur à combustion interne selon l'une quelconque des revendications précédentes, **caractérisé en ce que** l'arbre d'entrainement (16) est supporté sur un côté, l'extrémité de la douille (30) opposée à l'actionneur (20) étant fermée par une paroi du corps de clapet (14) axialement délimitant la section annulaire.

5. Méthode de fabrication d'un système à clapet pour un moteur à combustion interne selon l'une quelconque des revendications précédentes, dans laquelle
on fabrique un carter de canal (10),
un arbre d'entrainement (16) métallique est inséré dans le carter de canal (10),
un actionneur (20) est monté sur le carter de canal (10) et est couplé avec l'arbre d'entrainement (14), et
dans le canal (12), un corps de clapet (14) en matière plastique est monté à l'arbre d'entrainement (16),
**caractérisée en ce que**
une douille métallique (30) est surmoulée avec matière plastique pour former le corps de clapet (14), l'arbre d'entrainement (16) est inséré dans la douille (30) lorsque l'arbre d'entrainement (16) est inséré dans le carter de canal (10), le corps de clapet (14) est positionné dans le canal (12) et l'arbre d'entrainement (16) est monté sur la douille (30).

6. Méthode de fabrication d'un système à clapet pour un moteur à combustion interne selon la revendication 5, **caractérisée en ce qu'**avant la fixation de l'arbre d'entrainement (16) à la douille (30), le corps de clapet (14) est tourné dans le canal (12) et sur l'arbre d'entrainement (16) et est déplacé le long l'axe de l'arbre jusqu'une fente définie est ajustée.

7. Méthode de fabrication d'un système à clapet pour un moteur à combustion interne selon la revendication 5 ou 6, **caractérisée en ce qu'**avant la fixation de l'arbre d'entrainement (16) à la douille (30), une roue dentée menée (26) d'un engrenage (24) dudit actionneur (20) est montée sur l'arbre d'entrainement (16).

8. Méthode de fabrication d'un système à clapet pour un moteur à combustion interne selon l'une quelconque des revendication 5 à 7, **caractérisée en ce que** l'arbre d'entrainement (16) est fixé sur la douille (30) par soudage.

9. Méthode de fabrication d'un système à clapet pour un moteur à combustion interne selon l'une quelconque des revendication 5 à 8, **caractérisée en ce qu'**un aimant est monté sur l'arbre d'entrainement (16) ou sur la roue dentée menée (26) pour l'acquittement de position, l'arbre d'entrainement (16) étant orienté de manière définie quant à sa position axiale et sa position en rotation, et que, puis, la douille (30) est soudée à l'arbre d'entrainement (16).
